# EUROPÄISCHE PATENTANMELDUNG

(11) **EP 4 305 956 A1**
(43) Veröffentlichungstag der Anmeldung: **17.01.2024**
(21) Anmeldenummer: 22184435.0
(22) Anmeldetag: 12.07.2022
(51) Int. Cl.: A01K 47/06

(54) **FLUGLOCHEINSATZ MIT UV STRAHLUNGSQUELLEN**

(71) Anmelder: Schwinger, Roland, 99084 Erfurt (DE)
(72) Erfinder: Schwinger, Roland, 99084 Erfurt (DE)
(74) Vertreter: Gleim Petri Patent- und Rechtsanwaltspartnerschaft mbB

(57) **Zusammenfassung**

Die Erfindung betrifft einen Fluglocheinsatz (1) zum Einsetzen in ein Basisflugloch einer Beute (2). Der Fluglocheinsatz (1) umfasst ein Basiselement (3) und eine Bestrahlungseinheit (4), welche in das Basiselement (3) eingesetzt ist. Das Basiselement (3) und die Bestrahlungseinheit (4) schließen eine Öffnung ein, welche ein gegenüber dem Basisflugloch verkleinertes Flugloch (5) bildet, durch das Bienen in die und aus der Beute (2) gelangen, wobei das Flugloch (5) eine Breite, eine Höhe und eine Tiefe aufweist. In der Bestrahlungseinheit (4) sind mehrere Lichtquellen angeordnet, welche Licht im ultravioletten Spektralbereich UV-A mit Wellenlängen zwischen 315 nm und 380 nm und/oder UV-B mit Wellenlängen zwischen 280 nm und 315 nm und/oder UV-C mit Wellenlängen zwischen 100 nm und 280 nm in das Flugloch (5) abstrahlen.

Erfindungsgemäß sind die Lichtquellen in der Bestrahlungseinheit (4) bezogen auf die Breite nebeneinander in einer Reihe angeordnet und decken den überwiegenden Teil der Breite des Fluglochs (5) ab, so dass dieses zumindest über einen Bereich, in welchem die Höhe des Fluglochs (5) ein Hindurchschlüpfen der Bienen ermöglicht, mit Licht bestrahlt wird, und wodurch entlang der Tiefe des Fluglochs (5), welche einer Flugrichtung der Bienen entspricht, der bestrahlte Bereich so schmal wie möglich ausgebildet ist.

## Beschreibung

### Technisches Gebiet der Erfindung

Die Erfindung betrifft einen Fluglocheinsatz zum Einsetzen in ein Basisflugloch einer Beute, wobei sich das Basisflugloch in der Regel im Boden der Beute befindet. Unter einer Beute wird dabei die künstliche Behausung von Bienen verstanden, welche ein Imker verwendet. Oft werden dabei sogenannte Magazinbeuten verwendet, welche aus mehreren Bauelementen zusammengefügt sind und beispielsweise einen offenen Gitterboden, mehrere Zargen für Brut- und Honigräume und einen Deckel umfassen.

Der Fluglocheinsatz umfasst ein Basiselement sowie eine Bestrahlungseinheit, welche in das Basiselement eingesetzt ist. Das Basiselement und die Bestrahlungseinheit schließen eine Öffnung ein, welche ein gegenüber dem Basisflugloch verkleinertes Flugloch bildet, durch das Bienen in die Beute und aus der Beute gelangen. Das Flugloch weist Abmessungen auf, die sich als Breite, Höhe und Tiefe definieren lassen. Die Breite des Fluglochs ist dabei größer als die Tiefe des Fluglochs. In der Bestrahlungseinheit sind mehrere Lichtquellen angeordnet, welche Licht im ultravioletten Spektralbereich UV-A, UV-B und/oder UV-C in das Flugloch abstrahlen. Unter dem Spektralbereich UV-A wird der Bereich verstanden, welcher Wellenlängen zwischen 315 nm und 380 nm umfasst. Unter dem Spektralbereich UV-B wird der Bereich verstanden, welcher Wellenlängen zwischen 280 nm und 315 nm umfasst. Unter dem Spektralbereich UV-C wird derjenige Wellenlängenbereich verstanden, welcher Wellenlängen im Bereich zwischen 100 nm und 280 nm umfasst.

Mithilfe des Fluglocheinsatzes soll die Varroa-Milbe effektiv bekämpft werden. Die Varroa-Milbe stellt seit den siebziger Jahren des vergangenen Jahrhunderts weltweit eine immer größere Bedrohung für die Bienenvölker dar und ist eine der wesentlichen Ursachen für das weltweite Bienensterben. Seit langem wird an Wegen und Mitteln geforscht, den Befall von Bienenvölkern mit der Varroa-Milbe zu verhindern. Jedoch wurden bisher überwiegend lediglich Methoden entwickelt, die den Befall im Bienenstock auf ein für die Bienen verträgliches Maß reduzieren können. Allen Methoden ist jedoch gemeinsam, dass sie auch zu einer teilweise erheblichen lebensbedrohenden Schädigung des Bienenvolkes - hier vor allem der Brut - führen und der Einsatz chemischer Mittel für den Imker gesundheitsgefährdend sein kann.

Die Varroa-Milbe durchlebt im Bienenstock grundsätzlich zwei verschiedene Lebenszyklen, eine phoretische und eine reproduzierende Phase. In der phoretischen Phase nutzt die Varroa-Milbe die Biene, bevorzugt die Ammenbiene, zum Transport von einer Brutzelle zur anderen, ohne die Biene dabei abzutöten. Beim Transport erfolgt einer Parasitierung durch die Milbe, indem diese den Fettpanzer der Biene, bevorzugt am dritten Segment des Tergits anknabbert, was zu einer Verletzung der Biene führt. Durch die dabei entstehende offene Wunde können in der Folge Bakterien und Viren eindringen, die zu schwerwiegenden Erkrankungen der Biene führen können. In der reproduzieren Phase lässt sich die Milbe in die Brutzelle ca. 8-12 Stunden vor der Fertigstellung einschließen und beginnt nach ca. drei Tagen mit der Eiablage. Das erste Ei ergibt eine männliche Milbe, in der Folge werden bis zu vier oder mehr weitere Eier gelegt; die Paarung erfolgt vor der Öffnung der Zelle; die Muttermilbe mit mindestens zwei Tochtermilben verlässt die Brutzelle. Diese heften sich dann wieder an andere Ammenbienen an, wandern zu deren Rückenpolster und besetzen wieder eine Brutzelle. Dieser Zyklus wiederholt sich im Leben der Milbe bis zu viermal.

In der phoretischen Phase werden die Milben häufig mit Ameisensäure bekämpft, die auf verschiedene Weisen verabreicht werden kann. Die Ameisensäure wirkt auch in die Brut, also in die reproduzierende Phase der Varroa-Milbe hinein, hat jedoch den Nachteil, dass es bei den Bienen häufig zu Brutschäden bis hin zu Königinnen-Verlusten bei hoher Konzentration der Säure kommen kann. Zudem gehen die Bienenvölker dann häufig aus der Brut, was bei einer Anwendung im Frühherbst zu keiner Entwicklung von langlebigen, den Winter überdauernden Bienen führt. Spätestens im Jahr 2027 ist in Europa darüber hinaus erschwerend die Anwendung von Ameisensäure als Tierarzneimittel nicht mehr standardmäßig zugelassen; Hersteller benötigen dann eine Einzelzulassung gemäß einer europäischen Verordnung vom 28. Januar 2022 (VO (EU) 2019/6).

In der reproduzierenden Phase der Milbe lässt sich diese am besten mittels einer zeitlich aufwendigen Entnahme der infizierten Brut bekämpfen. Die Brutentnahme muss dabei im Laufe des Jahres häufiger durchgeführt werden.

Werden Bienenvölker auf die oben beschriebene Weise über das Jahr annähernd von Varroa-Milben befreit, so sind sie dennoch zwischen Mitte Mai und November der Gefahr einer Reinvasion solcher Milben aus anderen, unbehandelten Bienenvölkern in der Umgebung ausgesetzt.

### Stand der Technik

Im Stand der Technik werden verschiedene Wege aufgezeigt, den Befall von Bienenvölkern mit Varroa-Milben zu bekämpfen oder zumindest zu analysieren. So wird in EP 2 789 227 A1 eine Vorrichtung zur Bekämpfung von Varroa-Milben in einem Bienenstock beschrieben, die auf einer homogenen Erwärmung der Atmosphäre innerhalb des Bienenstocks auf eine Temperatur zwischen 40 °C und 42 °C beruht. Diese Vorrichtung benötigt viel Energie, da ein relativ großes Volumen beheizt werden muss. Das Einsetzen der Vorrichtung erfolgt mindestens teilweise durch das Flugloch.

In der US 2008/0280528 A1 werden eine Vorrichtung und ein Verfahren zur mechanischen Entfernung von Varroa-Milben von den Bienen beschrieben, welche vor das Flugloch oder in das Schlupfloch gesetzt wird. Es handelt sich um eine einfache Kombination aus einer Bürste und einem Auffangbehälter, in welchem die abgebürsteten Varroa-Milben gesammelt werden. Der Auffangbehälter kann auf einfache Weise entfernt werden.

In der US 10,874,090 B2 wird eine in die Beute einzusetzende Vorrichtung beschrieben, mit der der Befall von Honigbienen mit Varroa-Milben festgestellt werden kann.

Darüber hinaus ist im Stand der Technik allgemein bekannt, dass Viren, Bakterien und Milben durch Bestrahlung mit hochenergetischem ultraviolettem Licht, insbesondere UV-C-Licht letal verletzt werden können. Eine solche Anwendung im Bienenstock ist jedoch bei der Verwendung herkömmlicher UV-Lichtquellen mit einer hohen Wärmeentwicklung verbunden, die die Bienen nicht überleben würden. Im Gebrauchsmuster UA 82214 U wird ein Fluglocheinsatz beschrieben, bei der dem Flugloch eine tunnelförmige Einrichtung zu Bestrahlung von Bienen mit UV-Licht kurzer und mittlerer Wellenlängen vorgebaut ist. Der Fluglocheinsatz dient der Kontrolle des Befalls der Bienen. Die Biene durchfliegt den Tunnel entlang einer Reihe von UV-Strahlungsquellen, deren hohe Wärmeentwicklung über ein spezielles Schichtsystem mit variierender Wärmeleitfähigkeit entlang des Tunnels am Vorsatzkörper abgeführt wird. Zur Versorgung dienen auf dem tunnelförmigen Vorbau angeordnete Sonnenkollektoren. Abgesehen davon, dass diese Vorrichtung nur der Kontrolle des Befalls gilt und nicht seiner Bekämpfung, ist der Vorbau technisch recht aufwendig konstruiert, was hauptsächlich der hohen Wärmeentwicklung der UV-Lichtquellen geschuldet ist. Die Bestrahlung ist zudem davon abhängig, ob Energie über den Solarkollektor zur Verfügung gestellt werden kann oder nicht. Eine Bekämpfung der Varroa-Milbe ist auf diese Weise keinesfalls möglich. Auch wird es den Bienen aufgrund des langen Tunnels erschwert, in ihre Beute zu gelangen.

### Beschreibung der Erfindung

Aufgabe der Erfindung ist es, eine hinsichtlich Energieverbrauch und Material ressourcenschonende Vorrichtung für eine Bekämpfung von Varroa-Milben an Bienen zu entwickeln, welche die Bienen in ihrer gewohnten Umgebung möglichst wenig beeinträchtigt und die Strahlenbelastung möglichst gering hält.

Diese Aufgabe wird bei einem Fluglocheinsatz der eingangs beschriebenen Art gelöst, indem die Lichtquellen in der Bestrahlungseinheit bezogen auf die Breite nebeneinander in einer Reihe angeordnet sind und den überwiegenden Teil der Breite des Fluglochs abdecken, so dass dieses zumindest über einen Bereich, in welchem die Höhe des Fluglochs ein Hindurchschlüpfen der Bienen ermöglicht, mit Licht bestrahlt wird. Auf diese Weise wird zum einen sichergestellt, dass jede der Bienen auch in den Bereich der UV-Lichtquellen gelangt und zur Abtötung der Varroa-Milben bestrahlt werden kann, wobei die Lichtquellen nicht permanent Licht abstrahlend geschaltet sein müssen. Durch die Anordnung der Lichtquellen nebeneinander in der Breite des Fluglochs wird zum anderen sichergestellt, dass entlang der Tiefe des Fluglochs der bestrahlte Bereich so schmal wie möglich ausgebildet ist. Die Dimension der Tiefe des Fluglochs wird von der Außenseite zur Innenseite der Beute bzw. des Fluglocheinsatzes gemessen und entspricht der Flugrichtung der Bienen von innen nach außen bzw. von außen nach innen. Die Breite und die Höhe des Fluglochs werden jeweils senkrecht zur Tiefe und zueinander gemessen und korrespondieren zu der Größe der Öffnung, welche den Bienen für den Eintritt in die Beute und den Austritt aus der Beute zur Verfügung steht. Indem entlang der Tiefe des Fluglochs der bestrahlte Bereich möglichst schmal ist, kann die Belastung der Bienen durch die UV-Strahlen beim Durchtritt durch das Flugloch minimiert werden.

Insbesondere die Höhe des Fluglochs kann auch variabel gestaltet sein, die Öffnung muss nicht rechteckförmig sein. In einer bevorzugten Ausgestaltung weist das Basiselement im Bereich des Fluglochs, d. h. dort, wo es das Flugloch bildet, die Form einer Mulde auf, wobei das Flugloch in einem bezogen auf die Breite mittleren Bereich am weitesten geöffnet ist. Die Mulde kann im unteren Bereich des Fluglochs ausgebildet sein, gleichermaßen kann sie jedoch auch im oberen Bereich des Fluglochs ausgebildet sein, insbesondere können die obere Seite und die untere Seite des Fluglochs auch beide mit der Form einer Mulde ausgebildet sein. Vorteilhaft für das Einlaufen der Bienen ist die Mulde zumindest im unteren Bereich des Fluglochs ausgebildet, dann ist der tiefste Punkt der Mulde dabei in einem - bezogen auf die Breite - mittleren Bereich des Fluglochs, so dass dieses dort am weitesten geöffnet ist. Auf diese Weise werden die Bienen veranlasst, mehr in der Mitte des Fluglochs einzulaufen oder einzufliegen und können sicherer bei der Bestrahlung erfasst werden.

Besonders bevorzugt umfasst der Fluglocheinsatz außerdem ein Einflugelement, welches im Bereich des Fluglochs in das Basiselement eingesetzt ist. Seine Form im Bereich des Fluglochs korrespondiert zu der Form des Fluglochs, insbesondere hat es bei einer muldenförmigen Ausgestaltung des Fluglochs auch die Form der Mulde. Gegenüber dem Basiselement ist das Einflugelement beweglich angeordnet und kann ohne Hilfsmittel dem Basiselement entnommen und wieder in dieses eingesetzt werden, beispielsweise nach Art einer Schublade. Im einfachsten Fall wird das Einflugelement nur eingelegt. Auf diese Weise kann das Einflugelement leicht entnommen werden und von toten Bienen, Milben, abfallenden Pollen etc. gereinigt und anschließend wieder eingesetzt werden.

Vorzugsweise steht das Einflugelement entlang der Flugrichtung zumindest nach außen von der Beute weg über. Der Überstand kann beispielsweise 5 cm oder mehr betragen. Auf diese Weise finden die Bienen einen leichteren Zugang durch den Fluglocheinsatz in die Beute und können auf dem Einflugelement sicher landen oder starten. Ein bündiger Abschluss mit dem Flugloch selbst könnte die Bienen in Schwierigkeiten versetzen, den Eingang bzw. das Flugloch zu finden. Steht die Beute in einem Bienenhaus mit mehreren Bienenstöcken, so kann mittels des Einflugelements eine möglicherweise vorhandene Distanz zwischen dem Basisflugloch der Beute und der Wand des Bienenhauses überbrückt werden. Auch lässt sich ein überstehendes Einflugelement leichter dem Basiselement entnehmen.

Besonders bevorzugt weist das Einflugelement zum Flugloch hin eine Oberfläche oder eine Oberflächenbeschichtung auf, welche in demjenigen Spektralbereich, in welchem die Lichtquellen Licht abstrahlen, reflektierend ausgebildet ist. Im einfachsten und kostengünstigsten Fall kann dies beispielsweise eine AluminiumFolie sein; alternativ kommt auch eine Beschichtung mit Glas, das mit Aluminium-Teilchen versetzt wurde, infrage. Für UV-C-Licht im Bereich zwischen 250 nm und 280 nm besonders gut geeignet ist eine Beschichtung mit e-PTFE (expanded Poly-TetraFluor-Ethylen). Auf diese Weise können die Bienen auch von unten bestrahlt werden; insbesondere in Kombination mit der muldenförmigen Ausgestaltung wird die Bestrahlung besonders effizient, da die Muldenform zumindest abschnittsweise zu einer Bündelung der Strahlen nach Art einer Sammellinse führt. Das Einflugelement kann beispielsweise aus nachhaltigen Polylactiden (PLA) im 3D-Druckverfahren hergestellt werden. Auch das Basiselement selbst kann im Bereich des Fluglochs eine Oberfläche oder eine Oberflächenbeschichtung aufweist, welche in dem Spektralbereich, in welchem die Lichtquellen Licht abstrahlen, reflektierend ausgebildet ist. Dies ist insbesondere dann vorteilhaft, wenn kein zusätzliches Einflugelement vorgesehen ist. In jedem Falle ist eine solchermaßen reflektierende Oberfläche zusätzlich im oberen Bereich des Fluglochs vorteilhaft, so dass die Lichtstrahlen zwischen der Oberseite und der Unterseite des Fluglochs mehrfach reflektiert werden können, was insbesondere in Kombination mit einer muldenförmigen Ausgestaltung des Fluglochs im unteren Bereich zu einer besonders hohen Effizienz führt.

Zwar lässt sich auch der obere Bereich des Fluglochs muldenförmig ausgestalten, da dort jedoch auch die Lichtquellen angeordnet sind, ist dort fertigungstechnisch eine ebene Ausgestaltung zu bevorzugen. Dementsprechend ist die Bestrahlungseinheit vorzugsweise als quaderförmiger Behälter, vorzugsweise mit einem Deckel, der aufgeklappt oder abgenommen werden kann, ausgebildet. Auch die Bestrahlungseinheit kann aus dem Fluglocheinsatz entnommen werden, ohne den Fluglocheinsatz selbst entfernen zu müssen. Zu diesem Zweck weist das Basiselement beispielsweise nutförmige Aussparungen auf, in welche die Bestrahlungseinheit vorzugsweise bündig eingeschoben werden kann. Die seitlichen Ränder der Bestrahlungseinheit bilden dann die Zapfen für die nutförmigen Aussparungen. Auf diese Weise kann die Bestrahlungseinheit ohne Hilfsmittel dem Fluglocheinsatz entnommen werden.

In der als quaderförmiger Behälter ausgebildeten Bestrahlungseinheit können alle benötigten elektronischen Teile untergebracht werden und sind auf diese Weise sicher vor Witterungseinflüssen geschützt. An einer zum Flugloch weisenden Seite weist der Behälter eine Aufnahme auf, welche sich über den überwiegenden Teil der Breite des Fluglochs erstreckt. In dieser Aufnahme sind nebeneinander die Lichtquellen angeordnet und strahlen durch eine oder mehrerer in die Aufnahme eingebrachte Öffnungen Licht in das Flugloch ab. Dadurch sind die Bienen beim Durchtritt durch das Flugloch nur eine geringe Zeit der UV-Strahlung ausgesetzt, die Lichtquellen beleuchten dabei entsprechend der Ausdehnung der Aufnahme in der Breite den überwiegenden Teil des Fluglochs. Überwiegend bedeutet dabei, dass mindestens 50% des Fluglochs bestrahlt werden, bevorzugt jedoch wird das Flugloch über denjenigen Bereich in der Breite bestrahlt, der von den Bienen für den Durchtritt zwischen Beute und Außenwelt aufgrund seiner Dimensionierung noch genutzt werden kann. Bei einem entsprechend einer Mulde gekrümmten Einflugelement ist es durchaus möglich, dass die Randbereiche - bezogen auf die Breite - nicht hoch genug sind, um Bienen hindurchzulassen. Ist das Flugloch auf seiner unteren, d.h. der Bestrahlungseinheit gegenüberliegenden Seite, jedoch flach, so wird bevorzugt die gesamte Breite des Fluglochs von den Lichtquellen bestrahlt.

Die Höhe der Bestrahlungseinheit ist dabei so bemessen, dass sich auch bei längerem Betrieb das umschlossene Volumen nicht so stark erwärmt, dass sich die Bestrahlungseinheit verformen kann. Ist der untere Bereich des Fluglochs muldenförmig, so beträgt der Abstand der Bestrahlungseinheit am Rand beispielsweise 0,5 cm und in der Mitte am tiefsten Punkt der Mulde etwa 2,5 cm. Andere Abmessungen sind selbstverständlich möglich und liegen im Rahmen des fachmännischen Könnens.

Dabei ist es nicht zwingend, die Beleuchtungseinrichtung ausschließlich im oberen Bereich des Fluglocheinsatzes anzuordnen. Auch im unteren Bereich können Lichtquellen angeordnet sein, welche die Bienen von unten bestrahlen. Die Lichtquellen können in einer Ebene nebeneinander angeordnet sein, d. h. in die gleiche Richtung abstrahlen, oder bogenförmig, beispielsweise dem Verlauf der Mulde folgend, sofern vorhanden. Auch im oberen Bereich können die Lichtquellen auf einen Bogen angeordnet sein. Am effizientesten, aber auch am energieintensivsten ist eine Kombination aus Lichtquellen und einer Beschichtung, die UV-C- und UV-B-Licht reflektiert, auf beiden Seiten des Fluglochs, oben und unten.

Die Lichtquellen sind bevorzugt als Module mit einer oder mehrerer LED ausgestaltet, besonders bevorzugt als COB-("Chip-on-Board")-Module. Solche Module sind den klassischen, leistungsschwachen DIP-("Dual-in-line package")-Strahlern überlegen, da die COB-Module mehrere Vorteile gegenüber den DIP-Strahlern aufweisen: So ist der Wirkungsgrad höher, der Lichtstrom pro Watt ist höher, gleichzeitig wird weniger Wärme produziert. Der Abstrahlwinkel ist weiter, die Beleuchtung homogener. Auch sind die Anschaffungskosten geringer.

Die Module können auf verschiedene Weise ausgestaltet sein: Beispielsweise lassen sich Module mit einer oder mehreren LED verwenden, beispielsweise mit 16 LED, 100 LED oder mehr, wobei die Anzahl der LED selbstverständlich nicht auf diese beispielhaft genannten Zahlen beschränkt ist und alle anderen, praktikablen Zahlen von LED, beispielsweise zwischen einer LED und 200 LED ebenso realisiert sein können. Eine einzelne LED ist dann besonders effizient, wenn sie nur einen kleinen Wellenlängenbereich oder eine einzelne Wellenlänge abdeckt. Um die Varroa-Milben dennoch mit Licht eines breiten Wellenlängenbereichs bestrahlen zu können, ist es daher von Vorteil, wenn die Module, die mehrere LED aufweist, mit mehreren Typen von LED ausgestattet sind, wobei die Typen sich in den abgestrahlten Wellenlängen oder Wellenlängenbereichen unterscheiden. Alternativ können die Lichtquellen mehrere Typen von Modulen umfassen, welche sich in den abgestrahlten Wellenlängen oder Wellenlängenbereichen unterscheiden. Im letzteren Fall strahlen die LEDs eines Moduls alle in demselben Wellenlängenbereich ab, verschiedene Module strahlen jedoch verschiedene Wellenlängenbereich ab. Eine Kombination dieser beiden Ausgestaltungen ist ebenfalls möglich. Insbesondere vorteilhaft ist jedoch die Ausgestaltung, bei der in einem Modul mehrere Typen von LED angeordnet sind, da dann die Bestrahlung mit einem Wellenlängenbereich über die gesamte Breite des Fluglochs relativ homogen bleibt.

Für die Bestrahlung der Bienen zur Abtötung der Varroa-Milben besonders geeignet sind Lichtquellen, welche Licht in einem Wellenlängenbereich zwischen 245 nm und 315 nm abstrahlen. Bevorzugt strahlen die Lichtquellen Licht in einem Wellenlängenbereich zwischen 265 nm und 305 nm ab, mit einer Peak-Wellenlänge beispielsweise bei 275 nm. Licht dieses Wellenlängenbereichs hat sich als besonders effizient erwiesen, wobei die Bienen bei Verwendung dieses Typs von Beleuchtung nicht geschädigt werden, da diese Art von Lichtquellen mit relativ geringer Strahlungsleistung betrieben werden kann. Alternativ oder ergänzend zur den o.g. Wellenlängenbereichen UV-B und/oder UV-C können auch Lichtquellen verwendet werden, welche Licht im UV-A-Wellenlängenbereich abstrahlen. Untersuchungen deuten darauf hin, dass Licht aus diesem Wellenlängenbereich die Varroa-Milbe nicht tötet, sondern nur ihr Erbgut derart schädigt, dass die Fortpflanzung verhindert wird. Da UV-A-Licht den Panzer der Milbe leichter durchdringt als UV-B- oder UV-C-Licht, kann die benötigte Strahlungsleistung ggf. auch geringer sein. Die Lichtquellen werden hinsichtlich der Strahlungsleistung beispielsweise so angesteuert, dass bei einem Wellenlängenbereich zwischen 250 nm und 280 nm ihre Strahlungsleistung zwischen 2,0 mW und 350 mW liegt, bevorzugt liegt sie zwischen 50 mW und 200 mW bzw. zwischen 80 mW und 150 mW. Bei einem Modul von einer Größe von 30 x 30 mm und bestückt mit 16 LED beträgt die photometrische Leistung als Strahlungsleistung beispielsweise 3,5 mW bei einer Spannung von 5 V. Die elektrische Leistung beträgt 475 mW einer Spannung von 5 V und einem Strom von 95 mA. In Versuchen hat sich herausgestellt, dass eine Schädigung der Milben bereits bei einer Strahlungsleistung von 2 mW und einer Wellenlänge von 275 nm eintritt, eine Strahlungsleistung von 200 mW ist bei üblichen Fluglochgrößen in jedem Falle ausreichend, wobei die Biene davon ebenfalls nicht beeinträchtigt wird. Je höher die Strahlungsleistung ist, desto kürzer sollte die Bestrahlungszeit gewählt werden, um die Bienen nicht zu schädigen, wobei auch der Abstand der Lichtquellen zu den Bienen berücksichtigt werden muss. Beispielsweise setzt für eine Wellenlänge von 275 nm eine Schädigung der Varroa-Milbe bei einer Strahlungsleistung von 50 mW für Lichtquellen in 1 cm Abstand zu den Bienen ein, wenn die Bestrahlungszeit etwa drei Sekunden beträgt; bei einer Strahlungsleistung von 80 mW und gleichem Abstand sowie gleicher Bestrahlungszeit werden die Milben abgetötet. Bei einem größeren Abstand von 2,5 cm sind höhere Strahlungsleistungen von etwa 200 mW zu bevorzugen. Für eine Dauerbestrahlung sind hingegen kleinere Strahlungsleistungen angebracht, sofern die Verweildauer der Bienen im bestrahlten Bereich des Fluglochs ausreichend lang ist.

Die Stromversorgung kann permanent über ein vorhandenes Stromnetz erfolgen. Da Bienenvölker jedoch von den Imkern überwiegend an Plätzen aufgestellt werden, wo keine elektrische Infrastruktur vorhanden ist, verfügt der Fluglocheinsatz bevorzugt über einen Ladungsspeicher, beispielsweise einen Akku oder eine sogenannte Powerbank, die vorzugsweise in die Bestrahlungseinheit eingelegt oder integriert ist. Ein Akku mit einer Kapazität von 20.000 mAh beispielsweise kann im Dauerbetrieb bei ca. zehn Stunden pro Tag die Lichtquellen der Beleuchtungseinheit etwa 25 Tage mit Strom versorgen. Der Akku kann einfach gewechselt werden und an einer externen Stromquelle geladen werden. Auch ist es möglich, die Beute mit entsprechenden Solarzellen zu versehen, die den benötigten Strom für die Aufladung liefern, sofern sie nicht die Beleuchtung selbst mit Strom versorgen.

Da UV-C-Licht für das menschliche Auge nicht sichtbar ist, jedoch bei direkter Einstrahlung ins Auge schwere Schäden bis hin zur Hornhautablösung entstehen können, werden in die Module vorzugsweise zusätzlich weitere LED integriert, die Licht in einem für das menschliche Auge sichtbaren Wellenlängenbereich - beispielsweise im blauen Wellenlängenbereich - abstrahlen und leuchten, wenn ein Modul in Betrieb ist. Zusätzlich kann eine Sicherungsvorrichtung in die Bestrahlungseinheit integriert sein, die ein Entnehmen aus dem Fluglocheinsatz nur zulässt, wenn die Beleuchtung ausgeschaltet ist oder beim Entnehmen die Beleuchtung ausschaltet. Die Sicherungsvorrichtung kann beispielsweise eine Kontaktschaltung umfassen, durch die nur Strom fließt, wenn die Bestrahlungseinheit vollständig in das Basiselement eingesetzt ist, wobei der Stromfluss durch die Kontaktschaltung zwingend notwendig ist, um die Lichtquellen einzuschalten.

Zweckmäßig umfasst der Fluglocheinsatz außerdem Fixierungselemente zum Fixieren des Basiselements in der Beute. Vorzugsweise umfassen die Fixierungselemente Fixierungskeile, welche mit dem Basiselement verbunden sind. An jedem Fixierungskeil sind zwei Keilflächen ausgebildet, deren Abstand zueinander sich mit zunehmender Entfernung vom Basiselement - bei in das Basiselement eingesetzten Fixierungskeilen - vergrößert. Die Verbindung der Fixierungskeile mit dem Basiselement kann permanent sein, beispielsweise durch einstückige Ausbildung von Fixierungskeilen und Basiselement oder durch stoffschlüssige Verbindung. Vorzugsweise ist die Verbindung jedoch kraft- und formschlüssig. Beispielsweise kann im Basiselement ein Loch oder auch ein Sackloch ausgebildet sein, in welches ein Fixierungskeil nach Art eines Stiftes mit Übermaß eingesetzt wird. Auch eine Verbindung über ein Gewinde ist möglich. Die Verbindung kann auch so ausgestaltet sein, dass eine Längsverschiebung der Keile entlang des Lochs möglich ist, um eine Anpassung an verschiedene Tiefen von Basisfluglöchern von Beuten verschiedener Hersteller zu ermöglichen.

Mit zunehmender Entfernung vom Basiselement wird der Abstand der zwei Keilflächen eines Fixierungskeils zueinander größer, so dass durch ein Verkeilen ein Herausfallen aus der Beute verhindert werden kann. Zweckmäßig werden die Keile an ihrem Ende, welches dem Basiselement abgewandt ist, mit einer oder mehreren Einkerbungen versehen, die eine lockere Verankerung im Basisflugloch ermöglicht.

Das Einsetzen in das Basisflugloch wird erleichtert, wenn die beiden Keilflächen eines Fixierungskeils eine Gabel bilden. Die beiden Keilflächen können selbst als Federn ausgebildet sein, vorzugsweise ist aber zwischen den beiden Keilflächen ein Federelement angeordnet, welches die Keilflächen auseinanderdrückt. Diese Ausgestaltung ist darüber hinaus auch materialsparend. Die Fixierungselemente wie auch die meisten der anderen Teile des Fluglocheinsatzes können im 3D-Druck hergestellt werden.

In einer besonders bevorzugten Ausgestaltung umfasst der Fluglocheinsatz außerdem einen Dämmerungssensor, welcher die Umgebungshelligkeit misst und in Abhängigkeit davon die Lichtquellen ein- oder ausschaltet. Da auch Bienen nachts in der Regel schlafen, wird die Bestrahlung in dieser Zeit nicht benötigt und kann beim Eintreten der Dunkelheit auf diese Weise automatisch abgeschaltet werden. Bei Tagesanbruch wird die Bestrahlung automatisch wieder eingeschaltet. Dies vermindert zum einen den Energieverbrauch, da der Betrieb des Dämmerungssensors in der Regel weniger Leistung benötigt als der Betrieb der Lichtquellen; zum anderen verringert oder verhindert die Verwendung von Dämmerungssensoren ggf. sogenannten Lichtstress bei den Bienen, da diese - wie andere Insekten auch - immer dorthin fliegen wollen, wo Licht leuchtet. Die Messung der Helligkeit erfolgt üblicherweise mit einem in den Dämmerungssensor integrierten Photo-Sensor, wobei die Helligkeitsschwelle vorzugsweise stufenlos einstellbar ist, beispielsweise zwischen 2 Ix für die Nacht und 2000 lx für den Tag. Der Dämmerungssensor kann ebenfalls in die Bestrahlungseinheit integriert sein und bei quaderförmiger Ausgestaltung der Bestrahlungseinheit in eine Aussparung eingesetzt sein, die an einer nach außen weisenden Schmalseite, d. h. am Rand ausgebildet ist.

Optional insbesondere für wissenschaftliche Analysen umfasst der Fluglocheinsatz eine Kamera mit Sensor und entsprechender Steuerung. Diese ist vorzugsweise in die Bestrahlungseinheit integriert. Damit lassen sich dann die durch das Flugloch hindurchtretenden Bienen aufnehmen und die Reaktionen der Bienen mit an diesen anhaftenden Varroa-Milben registrieren und auswerten. Die Auswertung kann ggf. gesondert in einem Labor erfolgen, aber auch von der in die Kamera integrierten bzw. mit dieser verbundenen Steuerung, die in der Regel mittels einer Software erfolgt, übernommen werden.

Bevorzugt umfasst der Fluglocheinsatz zudem mindestens einen Bewegungssensor, welcher in Abhängigkeit vom Durchtritt einer Biene durch das Flugloch die Lichtquellen ein- und ausschaltet oder auf- und abregelt. Auch der mindestens eine Bewegungssensor ist vorzugsweise in die Bestrahlungseinheit integriert. Die Lichtquellen werden in diesem Fall nur dann in Betrieb genommen, wenn sich Bienen im Fluglocheinsatz befinden. Da die Bienen meistens durch das Flugloch hindurchkrabbeln, sind Verzögerungen von der Registrierung der Bewegung durch den Bewegungssensor bis zum Einschalten der Lichtquellen in der Regel vernachlässigbar. Sinnvoll ist die Verwendung von mindestens zwei Bewegungssensoren, von denen einer von außen betrachtet vor den Lichtquellen und ein weiterer von außen betrachtet hinter den Lichtquellen angeordnet ist, um sowohl einfliegende als auch ausfliegende Bienen zu erfassen. Je nachdem, wie groß der von den Sensoren erfassbare Bereich des Fluglochs ist, können auch mehr Bewegungssensoren verwendet werden. Die Bewegungssensoren können auch unmittelbar vor und hinter den Lichtquellen angeordnet sein, wobei jeder Lichtquelle, also beispielsweise jedem Modul mit einer Vielzahl von UV-LEDs, ein eigenes Paar von Bewegungssensoren zugeordnet ist, um nur diejenigen Lichtquellen einzuschalten, in deren erfassbarem Bereich sich Bienen aufhalten.

In einer weiteren Ausgestaltung umfasst der Fluglocheinsatz außerdem mindestens einen Photo-Farbsensor, welcher das Vorhandensein von Varroa-Milben an durch das Flugloch tretenden Bienen registriert und in Abhängigkeit davon vorübergehend eine Strahlungsleistung der Lichtquellen verstärkt oder gesonderte Lichtquellen mit höherer Strahlungsleistung hinzuschaltet. Der Photo-Farbsensor kann beispielsweise in die Kamera integriert sein, sofern eine solche vorhanden ist. Er kann aber auch als gesondertes Element in die Bestrahlungseinheit integriert sein oder unabhängig von dieser angeordnet sein. Die Verwendung eines Photo-Farbsensors erleichtert das Erkennen von befallenen Bienen, da sich die Varroa-Milben an ihr deutlich durch ihre in der Regel rote oder braune Farbe unterscheiden. Werden befallene Bienen erkannt, so kann die Strahlungsleistung für einen kurzen Zeitraum, beispielsweise zwischen 1-10 Sekunden, vorzugsweise zwischen 3-5 Sekunden, erhöht werden, was die Bekämpfung der Milben effektiver macht, jedoch die Gesundheit der Bienen durch die UV-Strahlung nicht beeinträchtigt. Alternativ ist es auch möglich, die Lichtquellen erst einzuschalten, sofern der Photo-Farbsensor Varroa-Milben entdeckt. Der Photo-Farbsensor kann alternativ zu den Bewegungssensoren verwendet werden, oder in Ergänzung zu diesen. Bei einer Kombination der Sensoren lässt sich die Strahlung gezielt und lokal einsetzen, so dass die Bienen möglichst wenig beeinträchtigt werden und andererseits auch der Energieverbrauch vermindert wird, sofern der Dauerbetrieb der Sensoren energetisch günstiger als der Dauerbetrieb der Lichtquellen ist.

Die Steuerung aller Sensoren einschließlich der Kamera kann auf einem Chip integriert sein, der ebenfalls in der Bestrahlungseinheit angeordnet ist, aber auch eine einfach ausgestaltete Elektronik ist für den Betrieb grundsätzlich ausreichend. Erfolgt die Steuerung über einen Chip, so können in diesem auch lernfähige Algorithmen implementiert sein, so dass beispielsweise die Erkennung der Varroa-Milben im Laufe der Zeit verbessert wird und auch unten an den Bienen haftende oder nicht deutlich rotgefärbte Varroa-Milben erkannt werden.

Alle Elemente der Bestrahlungseinheit oder ein Teil davon sind vorzugsweise so ausgelegt, dass sie auch drahtlos mittels einer externen Steuereinheit, beispielsweise über Bluetooth mit einem Mobiltelefon kommunizieren. Dies kann beispielsweise zur Wartungszwecken oder zum Auslesen von in der Kamera gespeicherten Daten oder von Betriebszuständen der Sensoren erfolgen.

Es versteht sich, dass die vorstehend genannten und die nachstehend noch zu erläuternden Merkmale nicht nur in den angegebenen Kombinationen, sondern auch in anderen Kombinationen oder in Alleinstellung einsetzbar sind, ohne den Rahmen der vorliegenden Erfindung zu verlassen.

### Kurze Beschreibung der Zeichnungen

Nachfolgend wird die Erfindung anhand von Ausführungsbeispielen unter Bezugnahme auf die beigefügten Zeichnungen, die ebenfalls erfindungswesentliche Merkmale offenbaren, noch näher erläutert. Diese Ausführungsbeispiele dienen lediglich der Veranschaulichung und sind nicht als einschränkend auszulegen. Beispielsweise ist eine Beschreibung eines Ausführungsbeispiels mit einer Vielzahl von Elementen oder Komponenten nicht dahingehend auszulegen, dass alle diese Elemente oder Komponenten zur Implementierung notwendig sind. Vielmehr können andere Ausführungsbeispiele auch alternative Elemente und Komponenten, weniger Elemente oder Komponenten oder zusätzliche Elemente oder Komponenten enthalten. Elemente oder Komponenten verschiedener Ausführungsbespiele können miteinander kombiniert werden, sofern nichts anderes angegeben ist. Modifikationen und Abwandlungen, welche für eines der Ausführungsbeispiele beschrieben werden, können auch auf andere Ausführungsbeispiele anwendbar sein. Zur Vermeidung von Wiederholungen werden gleiche oder einander entsprechende Elemente in verschiedenen Figuren mit gleichen Bezugszeichen bezeichnet und nicht mehrmals erläutert. Es zeigen:
Fig. 1 einen Fluglocheinsatz zum Einsetzen in eine Beute,
Fig. 2 den in eine Beute eingesetzt Fluglocheinsatz aus Fig. 1,
Fig. 3 eine Explosionszeichnung des Fluglocheinsatzes aus Fig. 1,
Fig. 4A, 4B ein Basiselement des Fluglocheinsatzes,
Fig. 5A, 5B ein Einflugelement zum Einlegen in das Basiselement,
Fig. 6A, 6B einen ersten Teil einer Bestrahlungseinheit für den Fluglocheinsatz,
Fig. 7A, 7B einen zweiten Teil der Bestrahlungseinheit, und
Fig. 8A, 8B ein Fixierungselement zum fixieren des Fluglocheinsatzes in der Beute.

### Ausführliche Beschreibung der Zeichnungen

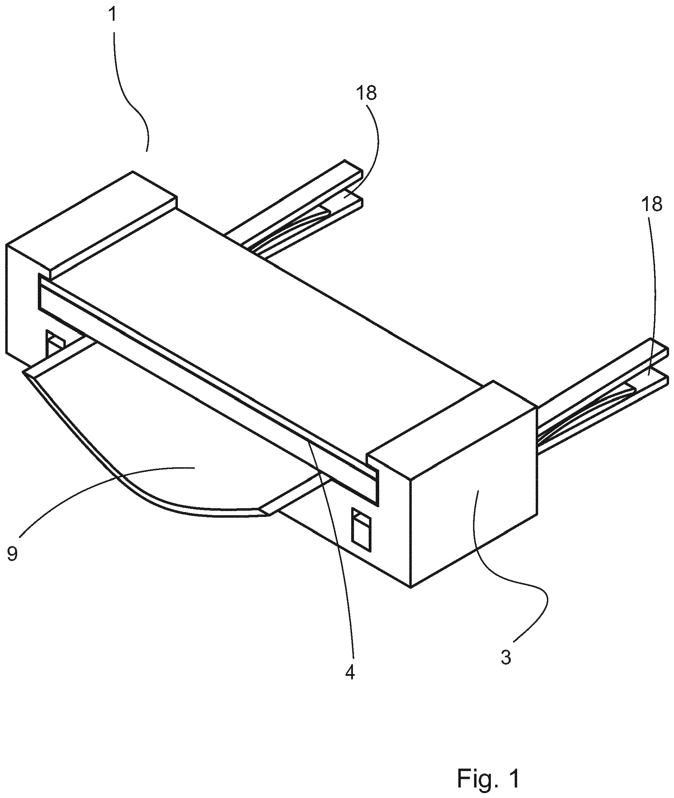

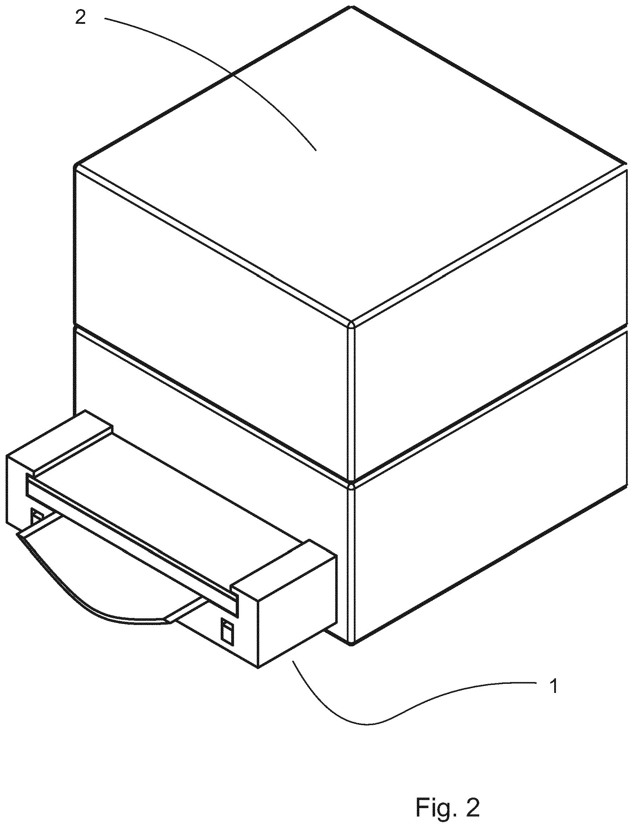

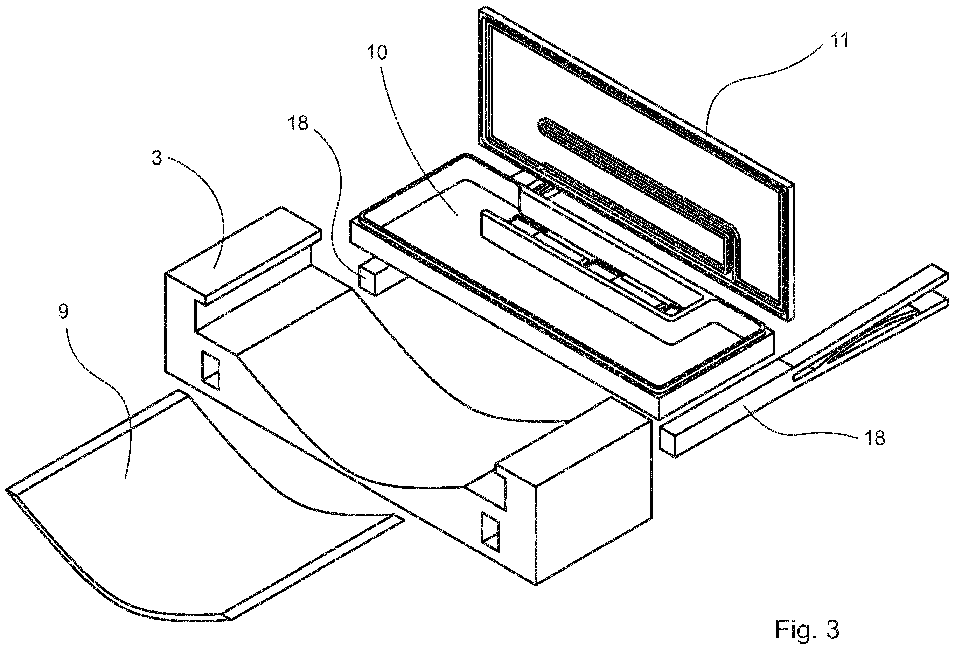

**Fig. 1** zeigt einen beispielhaften Fluglocheinsatz 1 zum Einsetzen in ein Basisflugloch einer Beute. **Fig. 2** zeigt den in eine Beute **2** eingesetzten Fluglocheinsatz **1.** **Fig. 3** zeigt eine Explosionsdarstellung der einzelnen Elemente des Fluglocheinsatzes **1** Der Fluglocheinsatz **1** umfasst ein Basiselement **3** und eine Bestrahlungseinheit **4,** welche in das Basiselement **3** eingesetzt ist. Das Basiselement **3** und die Bestrahlungseinheit **4** umschließen eine Öffnung, welche ein gegenüber dem Basisflugloch verkleinertes Flugloch **5** bildet. Das Flugloch **5** weist dementsprechend eine Breite, eine Höhe und eine Tiefe auf, wobei die Abmessungen konstruktionsbedingt vorgegeben werden. In der Bestrahlungseinheit **4** sind mehrere - nicht gezeigte - Lichtquellen angeordnet, welche Licht im ultravioletten Spektralbereich UV-B mit Wellenlängen zwischen 280 nm und 315 nm und/oder UV-C mit Wellenlängen zwischen 100 nm und 280 nm in das Flugloch **5** abstrahlen. Wie später noch erläutert wird, sind die Lichtquellen in der Bestrahlungseinheit **4** bezogen auf die Breite nebeneinander in einer Reihe angeordnet und decken den überwiegenden Teil der Breite des Fluglochs **5** ab, so dass dieses zum einen zumindest über einen Bereich, in welchem die Höhe des Fluglochs **5** ein Hindurchschlüpfen der Bienen ermöglicht, mit Licht bestrahlt wird, und zum anderen entlang der Tiefe des Fluglochs **5,** welcher einer Flugrichtung der Bienen entspricht, der bestrahlte Bereich so schmal wie möglich ausgebildet ist.

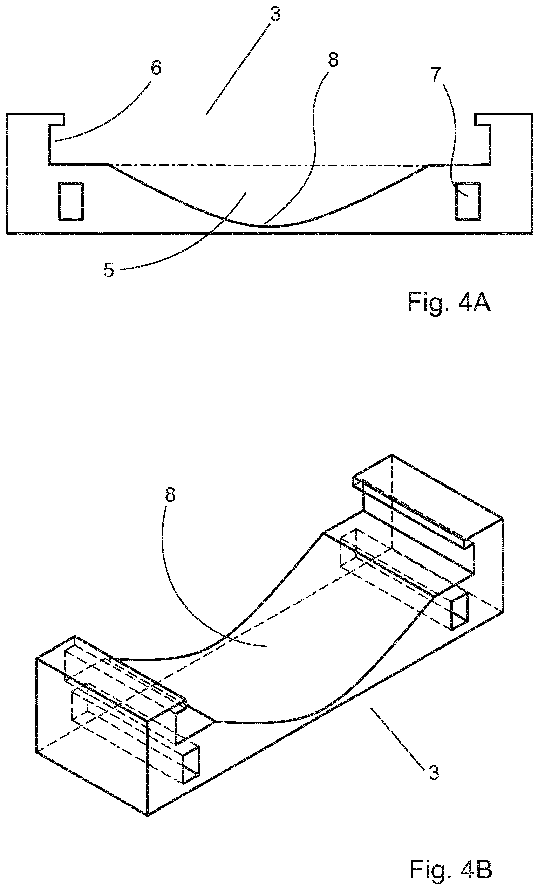

Das Basiselement **3** ist in **Fig. 4** einzeln dargestellt, **Fig. 4A** zeigt eine Frontansicht, **Fig. 4B** eine Perspektivansicht. Die gestrichelten Linien in **Fig. 4B** kennzeichnen nicht sichtbare Abmessungen des Basiselements **3.** Das Basiselement **3** weist auf der inneren, dem Flugloch **5** zugewandten Seite nutförmige Aussparungen **6** auf, in welche die Bestrahlungseinheit **4,** welche im gezeigten Beispiel quaderförmig ausgebildet ist, nach Art einer Schublade eingeschoben werden kann. Dabei ist es möglich, die nutförmigen Aussparungen **6** auf einer Seite mit einem Anschlag zu versehen, um ein Durchrutschen der Bestrahlungseinheit **4** zu verhindern. Ist der Fluglocheinsatz **1** in die Beute **2** eingesetzt, so bildet letztere jedoch in der Regel einen natürlichen Anschlag über die gesamte Breite der Bestrahlungseinheit **4.** Das Basiselement weist außerdem Verbindungslöcher **7** auf, in welche weiter unten noch beschriebene Fixierungselemente zum Fixieren des Basiselements **3** in der Beute **2** eingesetzt werden.

Das Basiselement **3** der hier gezeigten Ausführung weist im Bereich des Fluglochs **5** die Form einer Mulde **8** auf bzw. eine Aussparung in Form einer Mulde **8.** Der tiefste Punkt der Mulde liegt in einem mittleren Bereich des Fluglochs **5,** so dass dieses dort am weitesten geöffnet ist. Die strichpunktierte Linie in **Fig. 4A** deutet die Begrenzung des Fluglochs **5** auf der Oberseite an. Die Breite des Fluglochs **5** entspricht dann der Länge der gestrichelten Linie in **Fig. 4A****,** seine Höhe ist im gezeigten Beispiel variabel, wobei das Flugloch **5** am tiefsten Punkt der Mulde **8** am höchsten ist. Die Tiefe des Fluglochs wird in einer Richtung senkrecht zur Blattrichtung bezogen auf **Fig. 4A** gemessen. Indem das Flugloch **5** die Form einer Mulde aufweist, kann erreicht werden, dass die Bienen mehr in der Mitte des Fluglochs ein- und auslaufen; dabei ist es von Vorteil, dass - wie im gezeigten Beispiel - die Bestrahlungseinheit **4** das Flugloch **5** seitlich abgedeckt.

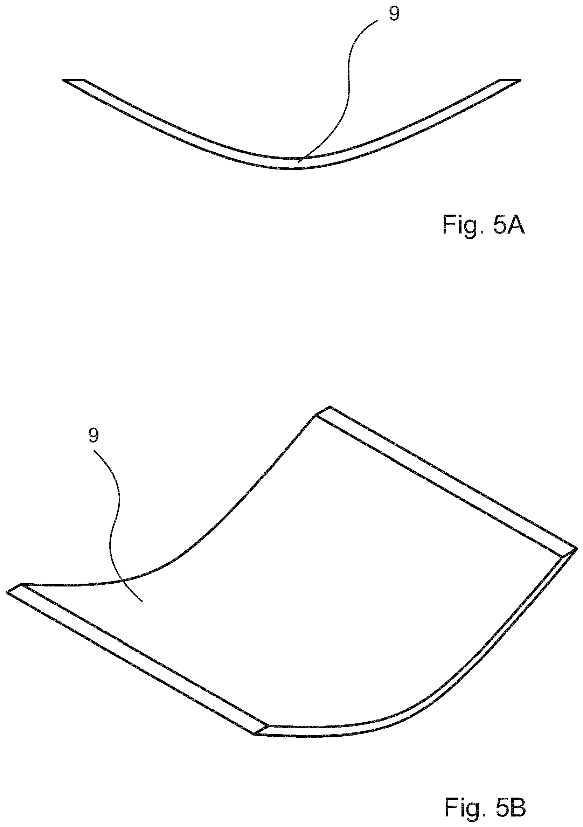

In der in **Fig. 1** und **Fig. 3** gezeigten Ausgestaltung umfasst der Fluglocheinsatz außerdem ein Einflugelement **9.** Dieses ist in **Fig. 5** in Alleinstellung dargestellt, **Fig. 5A** zeigt wieder eine Ansicht von vorne und **Fig. 5B** eine Perspektivansicht. Das Einflugelement **9** ist in **Fig. 1** und **Fig. 3** in das Basiselement **3** eingesetzt und korrespondiert zu dessen Form im Bereich des Fluglochs **5,** liegt also formschlüssig in der Mulde **8** auf und bildet selbst wiederum zum Flugloch hin eine Mulde. Gegenüber dem Basiselement **3** ist das Einflugelement **9** beweglich und kann ohne Hilfsmittel, d. h. ohne Werkzeug und nur mit den Händen aus dem Basiselement **3** entfernt werden. Auf diese Weise lassen sich beispielsweise tote Bienen leicht aus dem Flugloch entfernen, das Einflugelement **9** kann bei Verschmutzungen auch leichter gereinigt werden.

In der hier gezeigten Ausgestaltung steht das Einflugelement **9** außerdem entlang einer Flugrichtung - diese entspricht der Richtung der Tiefe des Fluglochs, in **Fig. 5A** also der Richtung senkrecht zur Blattebene - zumindest nach außen von der Beute **2** weg über. Der Überstand nach außen beträgt beispielsweise 5 cm, dies erleichtert den Bienen den Zugang zur Beute **2.** Sollte sich die Beute **2** in einem Bienenhaus mit mehreren anderen Beuten befinden, so kann mithilfe des Einflugelements **9** auch ein ggf. vorhandener Abstand zwischen der Wand des Bienenhauses und der Beute **2** überbrückt werden. Auch ein Überstand nach innen in die Beute **2** hinein ist denkbar.

Vorzugsweise weist das Basiselement **3** im Bereich des Fluglochs **5** eine Oberfläche oder eine Oberflächenbeschichtung auf, welche in dem Spektralbereich, in welchem die Lichtquellen Licht abstrahlen, reflektierend ausgebildet ist. Sofern ein Einflugelement **9** verwendet wird, weist entsprechend dieses vorzugsweise eine solchermaßen reflektierende Oberfläche oder Oberflächenbeschichtung auf.

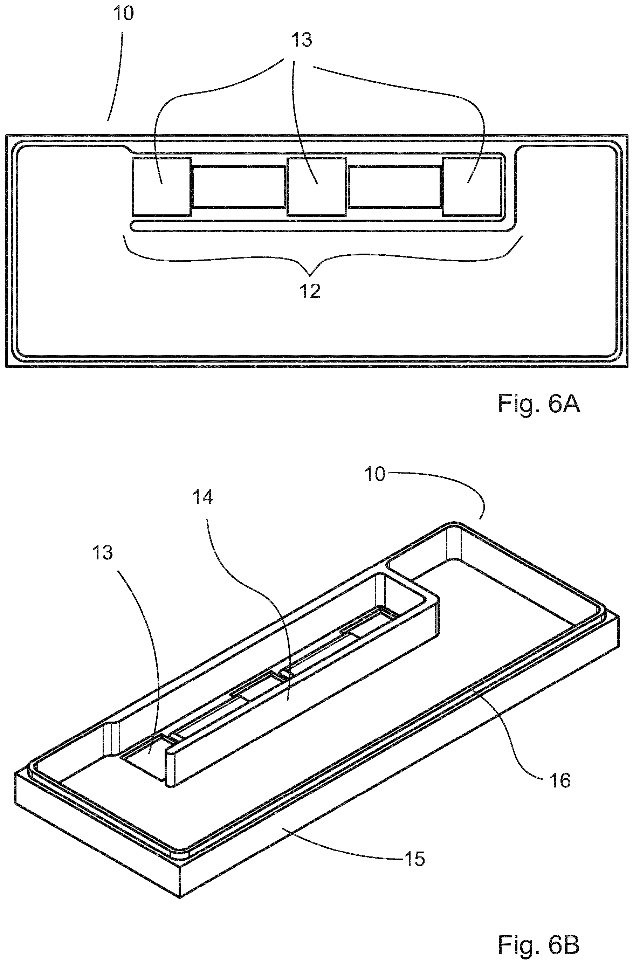

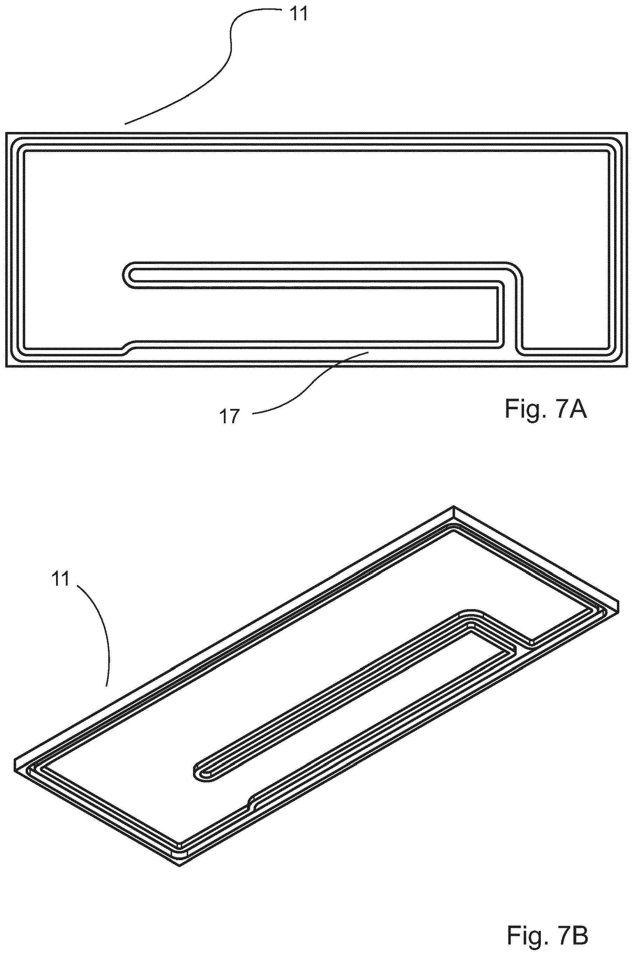

In dem in **Fig. 1** und **Fig.** 3 gezeigten Beispiel ist die Bestrahlungseinheit **4** als quaderförmiger Behälter **10** mit einem Deckel **11** ausgebildet. Der quaderförmige Behälter **10** ist in **Fig. 6****,** der Deckel **11** in **Fig. 7** im Detail dargestellt. **Fig. 6A** zeigt eine Draufsicht auf den offenen Behälter **10,** **Fig. 6B** eine Perspektivansicht des offenen Behälters **10.** Entsprechend zeigt **Fig. 7A** eine Ansicht des Deckels **11** von unten und **Fig. 7B** eine Perspektivansicht des Deckels **11,** ebenfalls von unten. Die Anordnung von Deckel **11** und Behälter **10** relativ zueinander ist in **Fig. 3** erkennbar. Der Behälter **10** wird mit aufgesetztem Deckel **11** in die nutförmigen Aussparungen **6** des Basiselements **3** eingeschoben. Der Behälter **10** weist an einer zum Flugloch **5** weisenden Seite eine sich quer zur Flugrichtung über den überwiegenden Teil der Breite des Fluglochs **5** erstreckende Aufnahme **12** auf. In die Aufnahme **12** sind eine oder mehrere - hier drei - Öffnungen **13** eingebracht, durch welche die - nicht gezeigten - Lichtquellen das Flugloch **5** beleuchten. Die Lichtquellen sind vorzugsweise als Module mit einer oder mehrerer LED ausgestaltet, bevorzugt als ansteuerbare Chip-on-Board-Module (COB-Module), sie können in die Öffnungen **13** eingelegt werden. Die Abmessungen der Öffnungen **13,** der Aufnahme **12** und der Lichtquellen sind zu diesem Zweck aufeinander abgestimmt.

Verwendbare UV-A-, UV-B- und UV-C-Lichtquellen als Module mit einer oder mehrerer LED sind im Stand der Technik bereits bekannt und wurden weiter oben bereits beschrieben. Die Module können mit verschiedenen Typen von LED ausgestattet sein, wobei sich die Typen in den abgestrahlten Wellenlängen oder Wellenlängenbereichen unterscheiden. Alternativ oder in Ergänzung umfassen die Lichtquellen mehrere Typen von Modulen, welche sich in den abgestrahlten Wellenlängen oder Wellenlängenbereichen unterscheiden. Die Lichtquellen strahlend bevorzugt Licht in einem Wellenlängenbereich zwischen 245 nm und 315 nm ab, ein bevorzugter Wellenlängenbereich liegt zwischen 265 nm und 305 nm, wobei sich eine Wellenlänge für die Bestrahlung der Bienen von 275 nm im UV-C-Wellenlängenbereich als besonders geeignet für die Abtötung der Varroa-Milben erwiesen hat. Ergänzend oder alternativ können UV-A-Lichtquellen verwendet werden, mit deren Licht die Milben so geschädigt werden, dass eine Fortpflanzung verhindert wird.

Um ein seitliches Verrutschen der Lichtquellen zu verhindern, weist der Behälter **10** eine um die Aufnahme **12** an drei Seiten herumlaufende Wand **14** auf. Diese dient auch dem Schutz der Lichtquellen, wenn sich beispielsweise in dem Behälter **10** noch andere Elemente wie eine bevorzugt wiederaufladbare Langzeitbatterie - beispielsweise in Form einer wiederaufladbaren Powerbank oder eines Lithium-Polymer-Akkus - befinden. Die Führung der Zuleitungen erfolgt über die offene Seite, in **Fig. 6A** und **Fig. 6B** auf der linken Seite der Aufnahme **12.** Der Behälter **10** weist auf seinem Rand **15** eine umlaufende Wulst **16** auf, welche bei aufgesetztem Deckel **11** in eine entsprechende am Deckel **11** ausgebildete Vertiefung **17** eingreift, um ein Verrutschen des Deckels **11** relativ zum Behälter **10** zu verhindern. Im Bereich der Wand **14** ist die Vertiefung **17** entsprechend breiter ausgestaltet, so dass auch die Wand **14** in die Vertiefung **17** eingreift.

Die Aufnahme **12** oder der Boden des Behälters **10** kann weitere Öffnungen, beispielsweise für eine Kamera oder einen Bewegungssensor umfassen. Ein optionaler Dämmerungssensor beispielsweise kann Umgebungslicht durch eine - hier nicht gezeigte - Öffnung im Rand **15** auf seiner der Aufnahme **12** gegenüberliegenden Seite erfassen. Zusätzlich kann die Bestrahlungseinheit **4** auch mit einer Sicherungsvorrichtung ausgestaltet sein, welche ein Entnehmen der Bestrahlungseinheit verhindert, wenn die Lichtquellen in Betrieb sind oder beim Entnehmen die Beleuchtung ausschaltet. Die Sicherungsvorrichtung kann beispielsweise eine Kontaktschaltung umfassen, durch die nur Strom fließt, wenn die Bestrahlungseinheit **4** vollständig in das Basiselement **3** eingesetzt ist, wobei der Stromfluss durch die Kontaktschaltung zwingend notwendig ist, um die Lichtquellen einzuschalten. Ein erstes Element der Kontaktschaltung ohne eigene Stromzufuhr kann beispielsweise in einer der beiden nutförmigen Aussparungen **6** angebracht sein und ein zweites Element der Kontaktschaltung, welches an die Stromzufuhr angeschlossen ist, an einer dazu korrespondierenden Position außen auf dem Behälter **10,** so dass die beiden Elemente der Kontaktschaltung nur dann korrekt miteinander in Kontakt stehen und den Stromkreis zur Versorgung der Lichtquellen nur dann schließen, wenn der Behälter **10** korrekt, ggf. bis zum Anschlag, in das Basiselement **3** eingesetzt ist. Unabhängig davon kann ein Schalter vorgesehen sein, mit welchem die Stromzufuhr für die Lichtquellen händisch ein- und ausgeschaltet werden kann. Eine dritte Stellung des Schalters kann zu einer Automatikschaltung korrespondieren, sofern Bewegungs- und/oder Dämmerungssensoren verwendet werden. Der Schalter kann für eine leichte Zugänglichkeit außen auf dem Behälter **10** oder bei entsprechender Leitungsführung, auch außen auf dem Basiselement **3** angebracht sein und optional auch mit dem ersten Element der Kontaktschaltung verbunden sein.

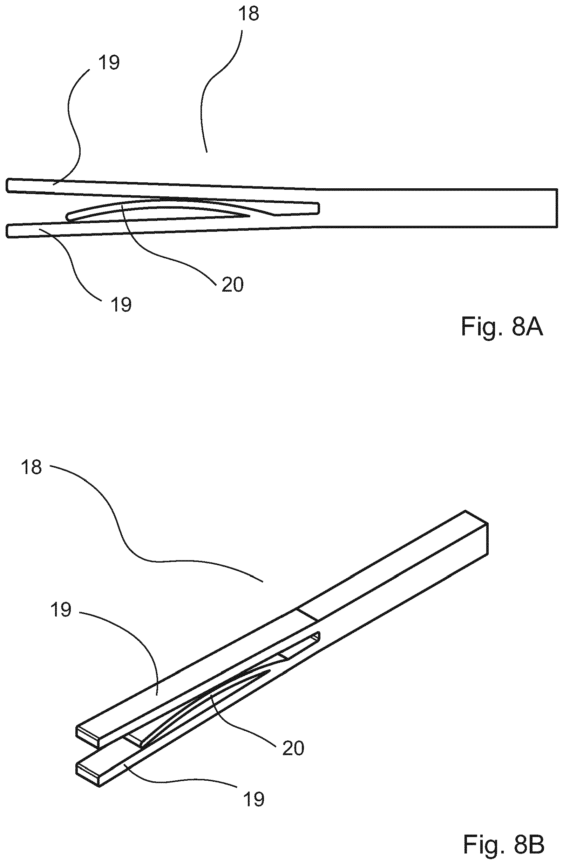

Damit der Fluglocheinsatz **1** in der Beute **2** fixiert werden kann, umfasst ersterer außerdem Fixierungselemente zu diesem Zweck. In dem hier beschriebenen Beispiel umfassen die Fixierungselemente Fixierungskeile **18,** welche in **Fig. 8** dargestellt sind. **Fig. 8A** zeigt einen Fixierungskeil **18** in einer Seitenansicht und **Fig. 8B** den Fixierungskeil **18** in einer Perspektivansicht. Mit der in **Fig. 8A, 8B** auf der rechten Seite dargestellten Seite wird der Fixierungskeil **18** in das Verbindungsloch **7** am Basiselement **3** eingesetzt. Eine leichte Übermaßpassung ist hier vorteilhaft, um zu verhindern, dass sich das Basiselement **3** und der Fixierungskeil **18** beispielsweise bei leichten Erschütterungen im Laufe der Zeit voneinander lösen. Auf der in **Fig. 8** linken Seite des Fixierungskeils **18** sind zwei Keilflächen **19** ausgebildet, deren Abstand zueinander sich mit zunehmender Entfernung vom Basiselement **3** - in der Zeichnung also nach links, bei in das Basiselement **3** eingesetzten Fixierungskeilen **18-**vergrößert.

In dem hier gezeigten Beispiel bilden die beiden Keilflächen **19** eine Gabel, wobei zwischen den beiden Keilflächen **19** ein Federelement **20** angeordnet ist, welches die Keilflächen **19** auseinanderdrückt, es aber auch ermöglicht, diese beim Einsetzen in ein Basisflugloch einer Beute **2** zusammenzudrücken. Auf diese Weise kann der Fluglocheinsatz **1** in eine Vielzahl von verschiedenen, gängigen Beuten eingesetzt und verkeilt werden.

Sämtliche Teile des Fluglocheinsatzes - bis auf die elektronischen Teile - können im 3D-Druckverfahren hergestellt werden. Auf diese Weise ist es möglich, viele verschiedenen Größen durch geringfügige Abwandlungen in der elektronisch hinterlegten Konstruktion, beispielsweise durch eine Skalierung, herzustellen. Die zu erzeugenden Elemente können als Hohlstrukturen realisiert werden, wobei die Wanddicke anhand von einem vorgegebenen Stabilitätskriterium festgelegt wird. Eine geringe Wanddicke lässt sich besonders gut erreichen, wenn die Hohlstrukturen im Innern mit *Gyroid*-Füllmustern stabilisiert werden. Diese Strukturen mit dreifachperiodischer minimaler Oberfläche stabilisieren die Strukturen in allen Raumrichtungen gleichermaßen und erlauben so eine relativ geringe Fülldichte (*infill density*). Dies spart nicht nur Materialkosten, darüber hinaus bleibt der Fluglocheinsatz auf diese Weise leicht gegenüber Varianten aus massivem Holz. Mittels Schmelzschicht-Druckverfahren (FFF - *Fused Filament Fabrication*) lassen sich im Wesentlichen nachhaltige Rohstoffe verwenden. Beispielsweise kann der Holzanteil - verwendet werden können beispielsweise Zedernholz oder Birkenholz - bis zu 60 % betragen, wobei die Holzanteile beispielsweise in Polymilchsäure eingebettet sein können, bei dem es sich um ein nachhaltiges Polymer handelt. Ein auf diese Weise hergestellter Fluglocheinsatz wiegt in der Regel auch mit elektronischen Teilen weniger als 1 kg. Im Gegensatz zu massivem Holz verformt sich das verwendete Material nicht oder nur unwesentlich und ist auch beständig gegenüber Verwitterung. Durch den Zusatz von speziellen, für die Bienen und Honig unbedenklichen Farbpartikeln für Fluglochfarben kann dem Fluglocheinsatz oder zumindest relevanten Teilen davon eine Farbe gegeben werden, die in gängigen Fluglöchern zum Einsatz kommt, um so den Bienen eine Orientierungshilfe beim Anfliegen der Beute zu geben. Die Breite des Fluglocheinsatzes liegt typischerweise im Bereich zwischen 8 cm und 12 cm bei einer typischen Breite einer Beute von 45 cm und mehr.

Der vorangehend beschriebene Fluglocheinsatz bietet eine preiswerte und universell mit den unterschiedlichsten Beuten einsetzbare Möglichkeit, den Befall der Bienenvölker mit Varroa-Milben effizient, mit wenig technischem Aufwand zu bekämpfen.

### Bezugszeichenliste

- 1: Fluglocheinsatz
- 2: Beute
- 3: Basiselement
- 4: Bestrahlungseinheit
- 5: Flugloch
- 6: nutförmige Aussparung
- 7: Verbindungsloch
- 8: Mulde
- 9: Einflugelement
- 10: Behälter
- 11: Deckel
- 12: Aufnahme
- 13: Öffnung
- 14: Wand
- 15: Rand
- 16: Wulst
- 17: Vertiefung
- 18: Fixierungskeil
- 19: Keilfläche
- 20: Federelement

## Patentansprüche

1. Fluglocheinsatz (1) zum Einsetzen in ein Basisflugloch einer Beute (2), umfassend
- ein Basiselement (3),
- eine Bestrahlungseinheit (4), welche in das Basiselement (3) eingesetzt ist, wobei das Basiselement (3) und die Bestrahlungseinheit (4) eine Öffnung einschließen, welche ein gegenüber dem Basisflugloch verkleinertes Flugloch (5) bildet, durch das Bienen in die und aus der Beute (2) gelangen, wobei das Flugloch (5) eine Breite, eine Höhe und eine Tiefe aufweist,
- mehrere in der Bestrahlungseinheit (4) angeordnete Lichtquellen, welche Licht im ultravioletten Spektralbereich UV-A mit Wellenlängen zwischen 315 nm und 380 nm und/oder UV-B mit Wellenlängen zwischen 280 nm und 315 nm und/oder UV-C mit Wellenlängen zwischen 100 nm und 280 nm in das Flugloch (5) abstrahlen, **dadurch gekennzeichnet, dass**
- die Lichtquellen in der Bestrahlungseinheit (4) bezogen auf die Breite nebeneinander in einer Reihe angeordnet sind und den überwiegenden Teil der Breite des Fluglochs (5) abdecken, so dass dieses zumindest über einen Bereich, in welchem die Höhe des Fluglochs (5) ein Hindurchschlüpfen der Bienen ermöglicht, mit Licht bestrahlt wird, und wodurch entlang der Tiefe des Fluglochs (5), welche einer Flugrichtung der Bienen entspricht, der bestrahlte Bereich, so schmal wie möglich ausgebildet ist.

2. Fluglocheinsatz (1) nach Anspruch 1, **dadurch gekennzeichnet, dass** das Basiselement (3) im Bereich des Fluglochs (5) die Form einer Mulde (8) aufweist, wobei das Flugloch (5) in einem bezogen auf die Breite mittleren Bereich am weitesten geöffnet ist.

3. Fluglocheinsatz (1) nach Anspruch 1 oder 2, umfassend außerdem ein im Bereich des Fluglochs (5) in das Basiselement (3) eingesetztes, zu dessen Form im Bereich des Fluglochs (5) korrespondierendes und gegenüber dem Basiselement (3) bewegliches, ohne Hilfsmittel entfernbares Einflugelement (9).

4. Fluglocheinsatz (1) nach Anspruch 3, **dadurch gekennzeichnet, dass** das Einflugelement (9) entlang der Flugrichtung zumindest nach außen von der Beute (2) weg übersteht.

5. Fluglocheinsatz (1) nach einem der Ansprüche 1 bis 4, **dadurch gekennzeichnet, dass** das Basiselement (3) im Bereich des Fluglochs (5) oder, falls vorhanden, das Einflugelement (9) zum Flugloch (5) hin eine Oberfläche oder eine Oberflächenbeschichtung aufweist, welche in dem Spektralbereich, in welchem die Lichtquellen Licht abstrahlen, reflektierend ausgebildet ist.

6. Fluglocheinsatz (1) nach einem der Ansprüche 1 bis 5, **dadurch gekennzeichnet, dass** die Bestrahlungseinheit (4) als quaderförmiger Behälter (10) mit einem Deckel (11) ausgebildet ist, und dass das Basiselement (3) nutförmige Aussparungen (6) zum Einschieben der Bestrahlungseinheit (4) aufweist.

7. Fluglocheinsatz (1) nach Anspruch 6, **dadurch gekennzeichnet, dass** der Behälter (10) an einer zum Flugloch (5) weisenden Seite eine sich quer zur Flugrichtung über den überwiegenden Teil der Breite des Fluglochs (5) erstreckende Aufnahme (12) aufweist, in welche nebeneinander die Lichtquellen angeordnet sind, wobei in die Aufnahme eine oder mehrere Öffnungen (13) eingebracht sind, durch welche die Lichtquellen das Flugloch beleuchten.

8. Fluglocheinsatz (1) nach einem der Ansprüche 1 bis 7, **dadurch gekennzeichnet, dass** die Lichtquellen als Module mit einer oder mehrerer LED ausgestaltet sind, bevorzugt als Chip-on-Board-Module.

9. Fluglocheinsatz (1) nach Anspruch 8, **dadurch gekennzeichnet, dass** die Module mit mehreren Typen von LED ausgestattet sind, wobei die Typen sich in den abgestrahlten Wellenlängen oder Wellenlängenbereichen unterscheiden, und/oder dass die Lichtquellen mehrere Typen von Modulen umfassen, welche sich in den abgestrahlten Wellenlängen oder Wellenlängenbereichen unterscheiden.

10. Fluglocheinsatz (1) nach einem der Ansprüche 1 bis 9, umfassend eine Sicherungsvorrichtung, die ein Entnehmen der Bestrahlungseinheit (4) verhindert, wenn die Lichtquellen in Betrieb sind.

11. Fluglocheinsatz (1) nach einem der Ansprüche 1 bis 10, umfassend außerdem Fixierungselemente zum Fixieren des Basiselements (3) in der Beute (2).

12. Fluglocheinsatz (1) nach Anspruch 11, **dadurch gekennzeichnet, dass** die Fixierungselemente Fixierungskeile (18) umfassen, welche mit dem Basiselement (3) verbunden sind und an jedem Fixierungskeil (18) zwei Keilflächen (90) ausgebildet sind, deren Abstand zueinander sich mit zunehmender Entfernung vom Basiselement (3) vergrößert, wobei bevorzugt die beiden Keilflächen (19) eine federnde Gabel bilden und zwischen den beiden Keilflächen (19) ein Federelement (20) angeordnet ist, welche die Keilflächen (19) auseinanderdrückt.

13. Fluglocheinsatz (1) nach einem der Ansprüche 1 bis 12, umfassend außerdem einen Dämmerungssensor, welcher die Umgebungshelligkeit misst und in Abhängigkeit davon die Lichtquellen ein- oder ausschaltet.

14. Fluglocheinsatz (1) nach einem der Ansprüche 1 bis 13, umfassend außerdem eine Kamera zur Aufnahme durch das Flugloch (5) hindurchtretender Bienen und/oder mindestens einen Photo-Farbsensor, welcher das Vorhandensein von Varroa-Milben an durch das Flugloch (5) tretenden Bienen registriert und in Abhängigkeit davon vorübergehend eine Strahlungsleistung der Lichtquellen verstärkt oder gesonderte Lichtquellen mit höherer Strahlungsleistung hinzuschaltet.

15. Fluglocheinsatz (1) nach einem der Ansprüche 1 bis 14, umfassend außerdem mindestens einen Bewegungssensor, welcher in Abhängigkeit vom Durchtritt einer Biene durch das Flugloch (5) die Lichtquellen ein- und ausschaltet oder auf- und abregelt.
